# NOUVEAU FASCICULE DE BREVET EUROPEEN

(11) **EP 0 987 098 B2**
(45) Date de publication et mention de la décision concernant l'opposition: **25.11.2009**
(45) Mention de la délivrance du brevet: 08.03.2006
(21) Numéro de dépôt: 99402258.0
(22) Date de dépôt: 15.09.1999
(51) Int. Cl.: B32B 5/18, A47L 13/16

(54) **Produit essuyant, sa préparation, têtes de balais à franges et combinés de nettoyage l'incorporant**
Wischprodukt, Verfahren zu seiner Herstellung, sowie Mopkopf und Reinigungsgegenstände mit diesem Wischprodukt
Wiping product, method of preparation thereof, and mopheads and cleaning objects incorporating the same

(30) Priorité: 16.09.1998 FR 9811542
(43) Date de publication de la demande: 22.03.2000
(73) Titulaire: FINANCIERE ELYSEES BALZAC, F-75008 Paris (FR)
(72) Inventeur: Chalvin, Christophe, 60000 Beauvais (FR); Crux, Christine, 60200 Compiegne (FR); Johnson, Bryan, 60000 Beauvais (FR); Veillerobe, Philippe, 60650 Saint Paul (FR)
(74) Mandataire: Le Roux, Martine

(56) Documents cités:
- EP-A- 0 110 678
- EP-A- 0 335 050
- EP-A- 0 602 617
- EP-A- 0 987 097
- FR-A- 2 210 377
- FR-A- 2 680 670
- GB-A- 2 152 842
- US-A- 4 276 339
- US-A- 4 341 832
- US-A- 5 763 067
- 'römpp chemie lexikon', vol. 9, 1991, GEORG THIEME VERLAG, STUTTGART, ISBN 3-13-734909-5 article JÜRGEN FALBE & MANFRED REGITZ, page 3439

## Description

La présente invention a pour objet :
- un produit essuyant,
- un procédé pour sa préparation,
- des têtes de balais à franges et combinés de nettoyage, incorporant ledit produit dans leur structure.

Ledit produit essuyant constitue un excellent outil d'entretien ménager. Il est du type de certains produits essuyants de l'art antérieur, en ce qu'il présente une structure composite qui comprend un substrat hydrophile, notamment un substrat fibreux ou alvéolaire choisi parmi les textiles, les mousses synthétiques et les matériaux alvéolaires cellulosiques, à au moins une face duquel est solidarisée, sur au moins une partie de la surface de ladite face, généralement sur la totalité de ladite face, une mousse hydrophobe à porosité ouverte, en ce qu'il est donc généralement du type peau monoface ou biface. Il constitue toutefois un perfectionnement auxdits produits de l'art antérieur de ce type en ce qu'il présente à la fois une forte capacité d'essuyage (*i.e*. de captage et de rétention de liquides, d"'absorption" sans relargage) et une bonne glissabilité. Son utilisation est plus aisée. Il ne présente pas la forte propension desdits produits de l'art antérieur à adhérer à la surface à traiter ainsi que sur eux-mêmes.

Le principe de fonctionnement des outils d'essuyage qui présentent la structure composite rappelée ci-dessus - basé sur le transfert du liquide de la surface à essuyer vers le substrat hydrophile via la capillarité de la mousse et la rétention dudit liquide au sein dudit substrat (dans la mesure où ledit liquide a beaucoup plus d'affinité pour ledit substrat hydrophile que pour ladite mousse hydrophobe) - a notamment été décrit dans la demande de brevet EP-A-1 849. Ledit principe a été mis en application sous différentes formes. Ainsi :
- la demande de brevet FR-A-2 194 569 décrit une peau de chamois synthétique constituée d'un substrat de tissu textile tricoté, tissé ou feutré, recouvert d'un revêtement constitué d'une matière plastique expansée;
- le brevet US-A-4,082,878 décrit un outil d'entretien ménager constitué d'un nontissé enduit avec une mousse expansée de latex;
- la demande de brevet EP-A-335 050 décrit un matériau alvéolaire cellulosique essuyant constitué d'un substrat alvéolaire cellulosique (type éponge cellulosique) revêtu, sur au moins une de ses faces, d'une mousse expansée de latex.

Ledit principe de fonctionnement ne paraît pas tout à fait correspondre à celui suggéré dans le brevet US-A-4,341,832, pour un outil d'essuyage type peau de chamois. Dans ce brevet, il est attribué à la mousse intervenant des propriétés de forte absorption d'eau avantageusement rehaussées par l'intervention, au sein de ladite mousse, de charges absorbantes de liquides aqueux, telles des particules d'argile.

Pour contrer l'effet de "tack" développé par la surface externe de ladite mousse, il est préconisé, selon US-A-4,341,832, une solution, tout à fait différente de celle présentement revendiquée, qui consiste à faire intervenir des taches d'un polymère filmogène, lesdites taches étant déposées sur ladite surface.

Les outils d'essuyage de l'art antérieur ont été utilisés en tant que tels ou intégrés dans des structures plus complexes. Ainsi la demande de brevet FR-A-2 680 670 décrit un combiné asséchant composé d'un corps alvéolaire hydrophile, avantageusement d'une éponge et d'une peau monoface.

Il a par ailleurs été décrit: - dans la demande ES-A-2 110 880, un balai à franges, dont les franges présentent une structure multicouche associant au moins une couche absorbante à une couche dite résistante ou couche de renfort. Ladite structure multicouche n'induit pas une amélioration des propriétés d'essuyage desdites franges ;
- dans le brevet US-A-5,763,067, des produits absorbants de liquides, qui présentent une structure originale. Ladite structure comprend essentiellement des particules de superabsorbants solidarisées à une ou deux couches de mousse, susceptibles de renfermer des charges aptes à rehausser le caractère absorbant desdites mousses. La couche discontinue des particules superabsorbantes n'est pas assimilable au substrat hydrophile qui entre dans la structure composite des produits de l'invention et, au vu des applications préconisées pour les produits absorbants décrits, il n'est évidemment pas abordé le problème de l'adhésivité de ceux-ci sur une surface ou sur eux-mêmes ...
- dans le brevet US-A-4,276,339, un stratifié qui présente une pellicule alvéolaire sur un papier crépon. Ledit papier crépon n'est pas un substrat hydrophile au sens de l'invention.

Enfin, le saupoudrage de charges minérales, avantageusement de talc, à la surface de peaux, afin de diminuer leur adhésivité sur elles-mêmes (effet de "tack") est connu de l'homme de l'art. Néanmoins, ce traitement n'est pas permanent. Les charges minérales introduites disparaissent lors de la première utilisation desdites peaux.

Selon l'invention, il est proposé un perfectionnement aux produits essuyants de l'art antérieur dont la structure composite comprend un substrat hydrophile choisi parmi les textiles, les mousses synthétiques et les matériaux alvéolaires cellulosiques, à au moins une face duquel est solidarisée, sur au moins une partie de la surface de ladite face, une mousse hydrophobe à porosité ouverte. Les produits de l'invention présentent ladite structure composite - qui se décline notamment selon ses deux variantes, principales de peau monoface et de peau biface - et, de façon caractéristique, ils renferment, dans ladite mousse hydrophobe à porosité ouverte, des charges minérales et/ou organiques en un(des) matériau(x) non absorbant(s) de liquides aqueux et en une quantité suffisante pour l'obtention de l'effet recherché : amélioration de la glissabilité du produit sur les surfaces à essuyer, diminution de l'adhésivité dudit produit auxdites surfaces ainsi que sur lui-même (effet de "tack").

On parle dans la présente description et les revendications annexées d'une mousse. Ce singulier n'est nullement limitatif. L'homme du métier comprend aisément qu'au même substrat hydrophile (sur une unique face de celui-ci ou sur plusieurs de ses faces) peuvent être solidarisées des mousses de même nature ou de natures différentes; au moins l'une desdites mousses étant, selon l'invention, chargée.

De façon surprenante, l'intervention des charges, au sens de l'invention, réduit significativement l'effet ventouse inhérent aux pores de la mousse, sans altérer outre mesure les propriétés d'essuyage et d'asséchage du produit.

Lesdites charges ne sont pas des matériaux absorbants de liquides aqueux, telles les charges selon US-A-4,341,832. On ne vise pas, selon l'invention, à garder du liquide au sein de la mousse. Pour une optimisation de l'essuyage, le liquide capté est transféré dans le substrat hydrophile et y demeure.

Pour l'obtention de l'effet escompté, il intervient plus de 1 % en poids, avantageusement plus de 5 % en poids, par rapport au poids sec de la mousse, de charges minérales et/ou organiques, non absorbantes de liquides aqueux.

On note ici que lesdites charges, intervenant au sens de l'invention, interviennent à un taux supérieur à celui de charges éventuellement présentes, de façon classique, au sein de la mousse, telles des pigments conférant, par exemple, à ladite mousse, une couleur donnée ; l'introduction de telles charges n'améliorant pas la glissabilité de ladite mousse.

On a indiqué ci-dessus que le produit de l'invention est généralement du type peau monoface ou peau biface. Avantageusement, il est du type peau monoface i.e. que sa structure composite comprend un substrat hydrophile (présentant généralement la forme d'un parallélépipède rectangle de relativement faible épaisseur) revêtu sur une unique de ses faces principales d'une mousse hydrophobe, à porosité ouverte, chargée. Il n'est toutefois nullement exclu que ledit substrat hydrophile soit revêtu sur ses deux faces principales opposées d'une même mousse hydrophobe ou de mousses hydrophobes différentes. De la même façon, il n'est pas exclu du cadre de l'invention des produits essuyants dont le substrat hydrophile est épais et présente plusieurs faces utilisables. Dans la mesure où au moins une telle mousse hydrophobe intervient sur au moins une face du substrat hydophile, on comprend, qu'elle intervient, selon l'invention, sur au moins une desdites faces, chargée, au sens de l'invention. Il ne saurait être exclu du cadre de l'invention des produits essuyants au sens de l'invention sur au moins une de leurs faces et essuyant au sens de l'art antérieur sur au moins une de leurs autres faces. Ainsi, font notamment partie intégrante de la présente invention des peaux bifaces comportant une unique mousse chargée au sens de l'invention ou deux mousses chargées au sens de l'invention, identiques ou pas.

On rappelle ici que la(les) face(s) du substrat hydrophile, revêtue(s) de la mousse hydrophobe à porosité ouverte chargée, l'est(le sont) à 100 % (sur 100 % de leur surface) ou seulement en partie ; ladite mousse intervenant par exemple selon des motifs. On comprend bien évidemment que les performances d'essuyage du produit sont liées au mode de répartition de ladite mousse sur ledit substrat hydrophile. Ainsi, les produits essuyants de l'invention comportent-ils avantageusement ladite mousse sur la totalité d'au moins l'une de leurs faces et constituent-ils donc, dans le cadre de cette variante avantageuse, des peaux monofaces ou bifaces, à glissabilité améliorée.

On a vu que lesdites mousses chargées au sens de l'invention renferment plus de 1 % en poids, avantageusement plus de 5 % en poids, de charges. Pour ce qui concerne la quantité d'intervention maximale desdites charges au sein desdites mousses, les inventeurs préconisent d'en faire intervenir moins de 40 %, avantageusement moins de 35 % en poids, toujours par rapport au poids sec desdites mousses.

En fait, il existe bien évidemment une limite supérieure théorique à la quantité d'intervention desdites charges au sein desdites mousses (on peut parler d'un taux de concentration volumique critique, taux qui correspond à l'occupation de tout le volume libre de la mousse) et cette limite supérieure dépend de la nature et de la granulométrie des charges en cause.

On retient ici que lesdites charges interviennent à raison de plus de 1 % à moins de 40% en poids, par rapport au poids sec de la mousse et avantageusement à raison de 5 à 35 % en poids. L'augmentation conséquente de la quantité de charges induit généralement une amélioration de la glissabilité du produit mais entraîne une réduction de ses propriétés d'essuyage. Le pourcentage optimal d'intervention dépend bien évidemment de la nature chimique des charges mais est souvent voisin de 30 % en poids.

L'homme du métier a par ailleurs déjà compris que la nature et le taux d'intervention desdites charges doit évidemment aussi être compatible avec le procédé d'élaboration de la mousse et celui, éventuel, de son enduction sur le substrat hydrophile.

On a parlé de charges organiques et/ou minérales, en un(des) matériau(x) non absorbant(s) de liquides aqueux. Il intervient avantageusement des charges organiques. De telles charges organiques peuvent intervenir sous des formes quelconques, notamment sous des formes à symétrie de révolution, telles des sphères ou des formes asymétriques, telles des écailles ou fragments.

L'intervention de charges minérales, elles aussi de forme quelconque, seules ou en mélange avec des charges organiques, n'est pas exclue mais peut, dans certains contextes, se révéler délicate. En effet, il existe des incompatibilités entre certaines charges minérales et certains constituants de la mousse. Par ailleurs, des charges minérales sont susceptibles de rayer la surface essuyée... On peut toutefois mentionner, dans le cadre de l'invention, l'intervention de charges minérales non absorbantes telles des particules de verre, de silice, de talc, de carbonate de calcium ou d'alumine.

A titre de charges organiques non absorbantes, on préconise l'intervention de charges en un matériau choisi parmi les polyéthylènes (notamment dits haute ou basse densité), les polypropylènes, les polychlorures de vinyle, les polystyrènes, les polyacrylates, les polyméthacrylates (notamment les polyméthacrylates de méthyle ou PMMA), les polyacétates de vinyle, les polyesters insaturés, les polyuréthanes, les polyamides, les copolymères correspondants (notamment les copolymères de chlorure et d'acétate de vinyle), les résines mélamine-formol et les résines phénoliques. Cette liste n'est nullement exhaustive.

Lesdites charges, en lesdits matériaux, peuvent être obtenues de façon connue en soi, par broyage mécanique (on génère alors des fragments ou écailles) ou par des techniques d'émulsion/suspension (on génère alors des charges à symétrie de révolution).

On confirme incidemment ici que différents types de charges sont évidemment susceptibles d'intervenir, conjointement, dans une même mousse : différents types de charges organiques, différents types de charges minérales, au moins un type de charges organiques avec au moins un type de charges minérales... Pour des raisons pratiques, la mousse des produits essuyants de l'invention ne renferme généralement qu'un type de charges (avantageusement organiques, comme indiqué ci-dessus).

La Demanderesse a noté que la nature des charges utilisées influe fortement sur les propriétés des produits finis. Elle a plus particulièrement relevé que des charges de polyéthylène, notamment haute densité, de polychlorure de vinyle (PVC) ou d'un copolymère de chlorure et d'acétate de vinyle permettent d'obtenir des produits très performants.

En référence à la taille desdites charges, on peut préciser ce qui suit. D'une manière générale, ladite taille n'est pas critique. L'augmentation de la granulométrie des charges permet, en général, d'obtenir un meilleur compromis mais une très large gamme de granulomètries (entre quelques microns et quelques centaines de microns) permet d'obtenir des résultats satisfaisants. En fait, les charges intervenant au sens de l'invention ont, en principe, leur plus grande dimension comprise entre 5 et 600 µm, avantageusement entre 10 et 400 µm. Il n'est nullement exclu de faire intervenir, en mélange, des charges de granulométrie différentes. De la même façon, il n'est nullement exclu de faire intervenir des charges dont au moins une des dimensions est supérieure à l'épaisseur de la mousse au sein de laquelle on les trouve. Lesdites charges peuvent alors éventuellement exercer un effet grattant, récurant.

De façon caractéristique, dans le cadre de l'invention, les charges décrites ci-dessus interviennent dans une mousse hydrophobe à porosité ouverte solidarisée à un substrat hydrophile, le tout constituant un produit essuyant à glissabilité améliorée, et présentant pas ou peu d'effet "tack" (ce résultat particulier étant obtenu sans qu'il soit nécessaire de faire appel aux moyens spécifiques, additionnels décrits dans US-A-4,341,832).

Ladite mousse hydrophobe et ledit substrat hydrophile sont respectivement des mousse et substrat du type de ceux qui interviennent dans la constitution de la plupart des produits essuyants de l'art antérieur. Ledit substrat présente, en tout état de cause, une structure continue.

On a vu précédemment que ledit substrat hydrophile intervient pour absorber et retenir le liquide essuyé. Il présente avantageusement un temps d'absorption de liquide faible, une rétention de liquide forte et pour ce faire, notamment, une forte teneur en fibres cellulosiques (avantageusement supérieure à 70 % en poids), le titre desdites fibres étant généralement faible (avantageusement inférieur à 5 dtex, voire inférieur à 3 dtex).

Ledit substrat hydrophile est avantageusement choisi parmi les nontissés, les tissus, les tricots et les matériaux alvéolaires cellulosiques du type éponge ou toile-éponge.

De tels matériaux alvéolaires cellulosiques sont notamment tels que décrits dans la demande EP-A-335 050.

Pour ce qui concerne les supports fibreux du type nontissé, tissu ou tricot, on peut préciser ce qui suit. Ils peuvent notamment contenir des fibres naturelles ou artificielles, par exemple, des fibres de coton, de rayonne, d'acétate de cellulose, éventuellement en mélange avec des fibres synthétiques, par exemple, des fibres de polyester, de polyamide, de polypropylène ...

Les nontissés sont obtenus et consolidés par des moyens connus de l'homme de l'art. Ils peuvent notamment être obtenus par voie aéraulique, par voie pneumatique ou par cardage et ils sont généralement consolidés par des moyens mécaniques tels que l'aiguilletage mécanique ou hydraulique, par thermoliage ou par des moyens chimiques. On préconise tout particulièrement l'intervention, dans la structure composite des produits essuyants de l'invention, à titre de substrat hydrophile, de nontissés résinés (liés chimiquement) sur une seule de leurs deux faces principales ; leur autre face principale étant ensuite recouverte au moins en partie de la mousse hydrophobe à porosité ouverte chargée. Il n'est toutefois bien évidemment nullement exclu d'obtenir des produits essuyants de l'invention à partir de nontissés résinés sur leur deux faces principales ; au moins l'une desdites deux faces étant alors recouverte au moins en partie de la mousse hydrophobe à porosité ouverte chargée.

Ledit substrat hydrophile peut aussi consister en une mousse synthétique, notamment une mousse de polyuréthanne hydrophilisée.

La mousse hydrophobe, solidarisée à au moins une partie de la surface d'au moins une face dudit substrat hydrophile peut elle aussi exister selon différentes variantes. Il peut notamment s'agir d'une mousse de polyuréthanne (mousse PU), de polychlorure de vinyle (mousse PVC), de polyvinylalcool (mousse PVA) ou d'une mousse de latex. Il s'agit avantageusement d'une mousse de latex, notamment obtenue à partir d'une formulation à base de latex butadiène - styrène-acrylonitrile (dit latex BSN) et/ou de latex butadiène-acrylonitrile (dit latex NBR). De telles mousses sont familières à l'homme du métier. Il en est de même de leur procédé de préparation. De façon caractéristique, lesdites mousses interviennent, chargées, dans le cadre de la présente invention. Les charges organiques et/ou minérales non absorbantes de liquides aqueux sont incorporées aux formulations permettant d'obtenir lesdites mousses. Elles ne doivent pas, comme indiqué précédemment, compromettre ledit procédé d'obtention.

Pour ce qui concerne les mousses de latex, particulièrement préférées à titre de mousse hydrophobe des produits essuyants de l'invention, plus précisément les matières premières de base entrant dans les formulations permettant d'obtenir lesdites mousses et leur procédé d'obtention, on peut se reporter à l'enseignement de la demande EP-A-335 050, incorporé ici à titre de référence.

Ladite demande décrit bien évidemment des mousses non chargées, au sens de l'invention. Selon l'invention, on fait intervenir dans leur composition, de façon caractéristique, des charges minérales et/ou organiques non absorbantes de liquides aqueux. On donne plus avant dans le présent texte quelques précisions techniques pour l'obtention, sur le substrat hydrophile, d'une mousse de latex chargée.

Selon une variante particulièrement préférée, les produits essuyants de l'invention comprennent :
- un nontissé, à titre de substrat hydrophile ;
- une mousse de latex obtenue à partir d'une formulation à base de latex butadiène-styrène-acrylonitrile et/ou butadiène-acrylonitrile, à titre de mousse hydrophobe (sur au moins une des faces dudit nontissé, recouvrant en totalité ou en partie seulement ladite face) ; ladite mousse hydrophobe renfermant, de façon caractéristique, des charges de polychlorure de vinyle et/ou des charges de polyéthylène.

Les produits essuyants de l'invention, tels que décrits ci-dessus, sont généralement préparés par un procédé qui comprend deux étapes essentielles et qui constitue le second objet de la présente invention. Ledit procédé comprend, en fait :
- la préparation d'au moins une mousse hydrophobe, à porosité ouverte, chargée en lesdites charges minérales et/ou organiques en un(des) matériau(x) non absorbant(s) de liquides aqueux ;
- la solidarisation de ladite mousse chargée au substrat hydrophile, notamment par collage ou enduction puis traitement thermique ;
- l'éventuelle découpe du produit essuyant obtenu.

Lesdites deux étapes essentielles de préparation de la mousse chargée et de solidarisation de ladite mousse chargée au substrat hydrophile peuvent être menées de façon tout à fait indépendante (la mousse finale chargée étant préparée dans un premier temps puis solidarisée au substrat, par collage ou couture par exemple) ou peuvent être menées de façon concomitante dans la mesure où la mousse finale chargée ne peut être générée que lors de sa solidarisation au substrat hydrophile (une mousse chargée est préparée, elle est enduite puis traitée thermiquement, ledit traitement thermique assurant à la fois l'obtention de la mousse finale chargée et sa fixation sur le substrat).

On se propose de préciser ci-après, en référence à une mousse de latex, son obtention et sa fixation sur un substrat hydrophile.

On formule, dans un premier temps, une composition aqueuse de latex chargée. Ladite composition de latex présente avantageusement une viscosité Brookfield comprise entre 1 500 et 5 500 mPa. s et un pH compris entre 7 et 9.

Celle-ci est alors expansée selon des procédés classiques, connus en eux-mêmes de l'homme de l'art. Une telle expansion est, par exemple, réalisée dans un mousseur continu permettant d'atteindre une masse volumique comprise entre 150 et 400 g/l.

Après expansion, la mousse obtenue est enduite sur le substrat hydrophile selon des modes opératoires connus en eux-mêmes. On peut, par exemple, utiliser un enducteur rouleau-râcle, un enducteur rouleau-rouleau ou un enducteur rouleau Storck sur un cadre rotatif de sérigraphie.

La quantité de mousse déposée doit permettre d'obtenir un bon accrochage sur le substrat et un éloignement dudit substrat de la surface à essuyer par une couverture totale. La quantité de matière déposée, en poids sec, se situe favorablement entre 40 et 150 g/m² et dépend essentiellement du mode d'enduction et/ou de la planéité du substrat (de la (ou des) face(s) destinée(s) à être enduite(s) en totalité ou en partie de celui-ci).

Une fois le substrat enduit avec la mousse chargée expansée, celui-ci est soumis à un traitement thermique. Un tel traitement thermique comprend avantageusement deux étapes :
- une première étape constituée d'un flash thermique, par exemple mis en oeuvre sous des panneaux infrarouges, pour gélifier, figer et ancrer la mousse ;
- une seconde étape constituée d'un chauffage dans un four, pour réticuler le(les) latex entrant dans la formulation de base de celle-ci.

Les précisions données ci-dessus le sont à titre illustratif et nullement limitatif.

A toutes fins utiles, on peut également indiquer, dans le même esprit, que les produits essuyants de l'invention, en cela du type de la plupart de ceux de l'art antérieur, comprennent généralement un substrat hydrophile d'une épaisseur de 1 à 3 mm et une mousse, sur au moins une face dudit substrat hydrophile, d'une épaisseur de 0,5 à 1 mm.

Lesdits produits essuyants de l'invention, utiles per se, peuvent également être utilisés, avantageusement, au sein de structures plus complexes. De telles structures plus complexes font partie intégrante de la présente invention et consistent notamment en des têtes de balai à franges ou des combinés de nettoyage.

Les têtes de balai à franges, selon l'invention, sont fixées ou destinées à être fixées à un manche, pour constituer un balai à franges et elles comportent un ensemble de franges plates rendues solidaires. En cela, elles sont du type des têtes de balai à franges de l'art antérieur. De façon caractéristique, leurs dites franges ou une partie seulement desdites franges (au moins une partie des franges plates dudit ensemble) sont au moins en partie en au moins un produit essuyant original de l'invention, produit essuyant à glissabilité améliorée. Lesdites franges originales sont avantageusement asymétriques pour présenter une face lavante, absorbante (face du substrat hydrophile non recouverte de mousse hydrophobe) et une face essuyante (face du substrat hydrophile recouverte au moins partiellement de la mousse hydrophobe chargée) à glissabilité améliorée.

Les têtes de balai à franges de l'invention peuvent exister selon de nombreuses variantes.

Avantageusement, leurs franges en produit essuyant de l'invention présentent une structure relativement homogène *i.e.* qu'elles sont constituées, dans leur intégralité, seulement d'au moins un tel produit essuyant, de préférence seulement d'un unique tel produit essuyant.

Selon une première variante particulièrement préférée, toutes les franges plates de l'ensemble des franges de la tête sont en le même produit essuyant monoface de l'invention et avantageusement elles ont été montées de sorte que leurs faces revêtues de la mousse hydrophobe à porosité ouverte chargée soient orientées dans le même sens, de préférence vers l'extérieur. Ainsi l'utilisateur peut-il tirer au mieux profit de la bifonctionnalité des franges. Il lave avec l'intérieur de celles-ci (face absorbante) et essuie avec l'extérieur. Lors de la mise en oeuvre d'un tel essuyage, la tête ou l'ensemble des franges est utilisée comme un tout.

Selon une seconde variante préférée, une partie seulement de l'ensemble des franges plates de la tête est en le même produit essuyant monoface de l'invention et avantageusement les franges en question ont été montées de façon à se trouver à la périphérie de l'ensemble des franges, leurs faces revêtues de la mousse hydrophobe à porosité ouverte chargée orientées vers l'extérieur. De la même façon que précédemment, l'utilisateur peut alors tirer au mieux profit de la bifonctionnalité des franges.

Les combinés de nettoyage de l'invention sont des combinés de nettoyage du type de ceux de l'art antérieur dans la mesure où ils comportent un produit essuyant associé à, solidarisé à, un substrat notamment choisi parmi les éponges, les mousses de polyuréthanne (mousse PU) et les nontissés récurants. Ils constituent un perfectionnement aux combinés asséchants au sens de la demande FR-A-2 680 670. Dans leur structure, le produit essuyant intervenant est original, de par la présence de charges en son sein. Ledit produit essuyant original est généralement contrecollé audit substrat complémentaire. On obtient ainsi, par exemple, des combinés bifonctionnels :
- essuyant-lavant (substrat = éponge ou mousse de polyuréthanne),
- essuyant-récurant (substrat = nontissé récurant).

Avantageusement, le produit essuyant qui intervient dans la structure de tels combinés est un produit du type monoface et il a été solidarisé au substrat complémentaire par sa face opposée à celle revêtue de la mousse hydrophobe à porosité ouverte chargée. De manière générale, on préconise de mettre en oeuvre une telle solidarisation par une face non traitée dudit produit.

L'invention est illustrée par les exemples ci-après.

La Demanderesse a préparé et testé des produits essuyants au sens de l'invention en utilisant :
- "différentes" formulations de latex, dont la composition moyenne est donnée dans le tableau I ci-après. Les variations des teneurs des différents constituants sont liées à des ajustements permettant de faciliter l'expansion de la formulation et/ou de pallier des variations de caractéristiques des matières premières d'un lot à l'autre. Ces adaptations sont mineures et familières à l'homme de l'art. Lesdites compositions de latex sont du type de celles décrites dans la demande EP-A-335 050;
- différents types de charges minérales ou organiques en un matériau non absorbant de liquides aqueux au sens de l'invention. La nature, l'origine et la granulométrie desdites charges sont données dans le tableau II ci-après. Lesdites charges ont généralement été obtenues par broyage.

Le taux d'intervention desdites charges dans lesdites formulations est indiqué dans le tableau III ci-après. Il est indiqué en parties en poids, pour 100 parties en poids des formulations de latex, non chargées, humides. Lesdites formulations de latex, chargées, humides, ont un extrait sec compris entre 39 et 50 % en poids. Les formulations préparées ont toutes un taux de charges inférieur à 40 % en poids, par rapport à leur poids sec.

La formulation A de référence, non chargée, a un extrait sec de 36,74 %. Elle présente une viscosité Brookfield de 2 320 mPa.s, un pH de 8,3 et un point de coagulation de 52°C.

Les formulations chargées - B à L, Q, S et T - ont un extrait sec compris entre 39,60 et 49,51 % (43,86 % pour les formulations B à H). Elles présentent :
- une viscosité Brookfield comprise entre 2 320 mPa.s et 5 040 mPa.s ;
- un pH compris entre 8 et 8,4 ;
- un point de coagulation compris entre 51 et 55°C.

**TABLEAU I**

| Constituant | Extrait sec (%) | % en poids dans les formulations |
|---|---|---|
| Latex NBR (butadiène-acrylonitrile) | 41 | 71 - 76,5 |
| Latex BSN (butadiène-styrène-acrylonitrile) | 40 | 5,2 - 6 |
| Pigment | 67 | 0,38 - 0,48 |
| Agent d'ajustement du pH | 5 | 0,24 - 0,30 |
| Agent moussant | 33,3 | 1 -1,2 |
| Agent stabilisant de mousse | 30 | 0 - 0,5 |
| Agent coagulant | 25 | 0,7 - 2,3 |
| Catalyseur | 10 | 1,85 - 2,35 |
| Epaississant | 6,25 | 8,5 - 16,5 |
| Agent anti-tack | 50 | 2,4-3,1 |

**TABLEAU II**

| Nature de la charge | Nom commercial | Fournisseur | Granulométrie moyenne (µm) | Formulations incorporant lesdites charges |
|---|---|---|---|---|
| Polystyrène | COATHYLENE SB 0425 | PLASTLABOR SA | 52 | B |
| Polypropylène | COATHYLENE PY 0787 - F | PLASTLABOR SA | 110 | C |
| Polyméthacrylate de méthyle | ELVACITE | GAZECHIM | 100 | D |
| Polyéthylène haute densité | COATHYLENE NB 6454 - F | PLASTLABOR SA | 60 | E |
| Polyéthylène haute densité | COATHYLENE NB 6454 - Y | PLASTLABOR SA | 110 | F, I à L |
| Polyéthylène basse densité | COATHYLENE HL 1681 - L | PLASTLABOR SA | 210 | G |
| Verre | | PGM | 50 | H |
| Polyéthylène haute densité | | SIFF | 300 | Q |
| Polychlorure de vinyle | LACOVYL PS 1050 | ELF ATOCHEM | 30 | S |
| Copolymère de chlorure et d'acétate de vinyle | LACOVYL PA 1384 | ELF ATOCHEM | 10 | T |

**TABLEAU III**

| Formulation | A | B à H | I | J | K | L | Q | S | T |
|---|---|---|---|---|---|---|---|---|---|
| Taux de charges (partie en poids)* | 0 | 13,62 | 6,33 | 8,68 | 19,01 | 24,69 | 18,44 | 19,67 | 13,62 |

| | | | | | | | | | |
|---|---|---|---|---|---|---|---|---|---|
| * pour 100 parties en poids de formulation non chargée. | | | | | | | | | |

Les formulations de latex chargées sont expansées dans un mousseur de façon à atteindre une densité égale à ou voisine de 200 g/l pour les formulations B à L, S, T et voisine de 300 g/l pour la formulation Q.

Lesdites formulations chargées sont enduites, à l'aide d'un enducteur rouleau-râcle, sur toute la surface de la face vierge d'un nontissé (consolidé par liage chimique sur son autre face), ledit nontissé présentant les caractéristiques suivantes :
Grammage : 190 g/m²
Composition des fibres : viscose (2,2 dtex) : 75 % en poids
   polyester (1,7 dtex) : 25 % en poids
Consolidation : liage chimique sur une seule de ses faces (dépôt : 15 g/m²).

Les taux d'enduction (dépôt en g/m²) sont indiqués dans les tableaux IV à VI ci-après, qui montrent également les caractéristiques des produits finis.

Les nontissés enduits sont alors soumis à un flash thermique (action des infrarouges) puis à un traitement thermique à l'air chaud.

On obtient ainsi des produits essuyants au sens de l'art antérieur (produit A', enduit de la formulation A non chargée) et au sens de l'invention (produits B' à L', Q', S' et T', respectivement enduits des formulations B à L, Q, S et T, chargées).

Lesdits produits finis ou produits essuyants ont été testés en vue d'apprécier leur capacité d'essuyage et leur glissabilité. La Demanderesse a plus précisément procédé à deux types de tests, dont on résume ci-après le principe et la mise en oeuvre.

### Test a: Mesure du temps de séchage

La méthode consiste à déterminer le temps nécessaire à l'évaporation des gouttelettes d'eau laissées par le produit humide après essuyage d'un miroir. Le test doit être réalisé dans une salle conditionnée (température : 20°C, humidité relative : 65 %).

Les éprouvettes (20 x 10 cm) sont rincées abondamment puis essorées pendant 1 minute dans une centrifugeuse à une vitesse de 1 000 tours par minute. L'échantillon à tester est fixé sur un petit chariot qui est lesté avec une masse de 1 kilogramme. 3 millilitres d'eau distillée sont répartis sur un miroir plan de 60 x 40 cm à l'aide d'un nontissé hydrophobe.

L'opérateur, en position assise, prend le chariot en main et essuie la surface d'un miroir en réalisant une série de mouvements cycloïdes, puis une série de mouvements verticaux parallèles. On mesure le temps nécessaire à la disparition des gouttelettes présentes à la surface du miroir à partir de la fin des mouvements d'essuyage.

### Test b : Mesure de l'adhérence à l'état humide

La méthode consiste à déterminer la force nécessaire pour déplacer un chariot revêtu du produit à tester sur une surface déterminée.

Les éprouvettes (20 x 10 cm) sont rincées abondamment puis essorées manuellement. L'échantillon à tester est fixé sur un chariot qui est relié par un fil, via une poulie, à une des mâchoires d'un dynamomètre. Le chariot est déposé sur une surface rugueuse de type "terrazo" et on mesure la force moyenne nécessaire pour déplacer le chariot de 10 centimètres en 1 minute.

Le tableau IV ci-après indique les résultats obtenus avec différents types de charges. Les charges S interviennent toutefois à un taux supérieur à celui des charges B à H et T (voir le tableau III).

**TABLEAU IV**

| Produit | A' | B' | C' | D' | E' | F' | G' | H' | S' | T' |
|---|---|---|---|---|---|---|---|---|---|---|
| Dépôt (g/m²) | 50 | 96 | 79 | 72 | 95 | 81 | 73 | 96 | 101 | 114 |
| Adhérence (N) | 7,4 | 4,6 | 4,8 | 4,5 | 4,1 | 4 | 4,1 | 6,1 | 1,8 | 4,4 |
| Temps d'essuyage (s) | 1 | 3 | 2 | 2 | 4 | 3 | 6 | 3 | 3 | 3 |

Les faces enduites des produits B' à T' présentent simultanément une faible adhérence (gain de 1 à plus de 3N) et des temps d'essuyage inférieurs à 10 secondes. L'adjonction d'environ 13,5 parties en poids de charges dans la formulation (pour 100 parties en poids de ladite formulation non chargée humide) permet d'obtenir des produits qui présentent simultanément de bonnes propriétés d'essuyage et de glissabilité. Le verre semble être la charge la moins performante, le copolymère de chlorure et d'acétate de vinyle la plus performante.

Le tableau V ci-après indique les résultats obtenus à différents taux de charges, charges du type polyéthylène haute densité : PEHD (voir le tableau II).

**TABLEAU V**

| Produit | A' | I' | J' | K' | L' |
|---|---|---|---|---|---|
| Taux de charge (partie en poids*) | 0 | 6,33 | 8,68 | 19,01 | 24,69 |
| Dépôt (g/m²) | 50 | 70 | 76 | 78 | 101 |
| Adhérence (N) | 7,4 | 5,4 | 4,7 | 3,8 | 3,5 |
| Temps d'essuyage (s) | 1 | 3 | 2 | . 8 | 60 |

| | | | | | |
|---|---|---|---|---|---|
| * pour 100 parties en poids de formulation non chargée. | | | | | |

Les faces enduites des produits I', J' et K' présentent simultanément une faible adhérence (jusqu'à deux fois plus faible que celle du produit non chargé) et des temps d'essuyage inférieurs à 10 secondes. L'adjonction de 6 à 20 parties en poids de charges PEHD, pour 100 parties en poids de formulation non chargée humide (environ 15 à 35 % par rapport à son poids sec) permet d'obtenir des produits qui présentent simultanément de bonnes propriétés d'essuyage et de glissabilité.

Le tableau VI ci-après indique les résultats obtenus avec deux granulométries de charges, charges du type polyéthylène haute densité : PEHD (voir le tableau II).

**TABLEAU VI**

| Produit | K' | Q' |
|---|---|---|
| Granulométrie moyenne des charges (µm) | 110 | 300 |
| Taux de charge (partie en poids) * | 19,01 | 18,44 |
| Dépôt (g/m²) | 78 | 161 |
| Adhérence (N) | 3,8 | 2,6 |
| Temps d'essuyage (s) | 8 | 5 |

| | | |
|---|---|---|
| * pour 100 parties en poids de formulation non chargée. | | |

L'augmentation de la taille des charges, les autres paramètres étant maintenus sensiblement constants, permet d'obtenir des produits qui présentent une meilleure glissabilité et de meilleures propriétés d'essuyage.

## Revendications

1. Produit essuyant dont la structure composite comprend un substrat hydrophile, choisi parmi les textiles, les mousses de polyuréthanne hydrophilisées et les matériaux alvéolaires cellulosiques, à au moins une face duquel est solidarisée, sur au moins une partie de la surface de ladite face, une mousse hydrophobe à porosité ouverte, **caractérisé en ce que** ladite mousse renferme plus de 1% en poids, avantageusement plus de 5% en poids, et moins de 40%, en poids par rapport à son poids sec, de charges minérales et/ou organiques, en un(des) matériau(x) non absorbant(s) de liquides aqueux.

2. Produit selon la revendication 1, **caractérisé en ce qu'**il consiste en un substrat hydrophile revêtu sur au moins une partie de la surface d'une seule de ses faces d'une mousse hydrophobe, à porosité ouverte, chargée ; avantageusement revêtu sur la totalité de la surface d'une seule de ses faces d'une mousse hydrophobe, à porosité ouverte, chargée.

3. Produit selon l'une des revendications 1 ou 2, **caractérisé en ce que** ladite mousse renferme moins de 35% en poids, par rapport à son poids sec, desdites charges.

4. Produit selon l'une quelconque des revendications 1 à 3, **caractérisé en ce que** lesdites charges sont des charges organiques qui présentent une forme à symétrie de révolution et consistent notamment en des sphères ou qui présentent une forme asymétrique et consistent notamment en des écailles ou fragments.

5. Produit selon l'une quelconque des revendications 1 à 4, **caractérisé en ce que** lesdites charges sont des charges organiques en un matériau choisi parmi les polyéthylènes, les polypropylènes, les polychlorures de vinyle, les polystyrènes, les polyacrylates, les polyméthacrylates, les polyacétates de vinyle, les polyesters insaturés, les polyuréthanes, les polyamides, les copolymères correspondants, les résines mélamine-formol et les résines phénoliques.

6. Produit selon l'une quelconque des revendications 1 à 5, **caractérisé en ce que** lesdites charges ont leur plus grande dimension comprise entre 5 et 600 µm, avantageusement entre 10 et 400 µm.

7. Produit selon l'une quelconque des revendications 1 à 6, **caractérisé en ce que** ledit substrat hydrophile est un nontissé, un tissu, un tricot, une mousse de polyuréthanne hydrophilisée ou un matériau alvéolaire cellulosique du type éponge ou toile-éponge.

8. Produit selon l'une quelconque des revendications 1 à 7, **caractérisé en ce que** ladite mousse hydrophobe consiste en une mousse de polyuréthanne, de polychlorure de vinyle, de polyvinylalcool ou avantageusement en une mousse de latex.

9. Produit selon la revendication 8, **caractérisé en ce que** ladite mousse hydrophobe consiste en une mousse de latex obtenue à partir d'une formulation à base de latex butadiène-styrène-acrylonitrile et/ou butadiène-acrylonitrile.

10. Produit selon l'une quelconque des revendications 1 à 9, **caractérisé en ce que** :
- ledit substrat hydrophile est un nontissé;
- ladite mousse est une mousse de latex obtenue à partir d'une formulation à base de latex butadiène-styrène-acrylonitrile et/ou butadiène-acrylonitrite;
- lesdites charges sont des charges de polychlorure et de vinyle et/ou de polyéthylène.

11. Procédé pour la préparation d'un produit selon l'une quelconque des revendications 1 à 10, **caractérisé en ce qu'**il comprend :
- la préparation d'au moins une mousse hydrophobe, à porosité ouverte, chargée en lesdites charges minérales et/ou organiques en un(des) matériau(x) non absorbant(s) de liquides aqueux ;
- la solidarisation de ladite mousse chargée au substrat hydrophile, notamment par collage ou enduction puis traitement thermique ;
- l'éventuelle découpe du produit essuyant obtenu.

12. Tête de balai à franges, comportant un ensemble de franges plates rendues solidaires, **caractérisée en ce qu'**au moins une partie des franges plates dudit ensemble est au moins en partie en au moins un produit essuyant selon l'une quelconque des revendications 1 à 10 ; toutes les franges plates dudit ensemble étant avantageusement en le même produit essuyant et montées, lorsque la mousse hydrophobe à porosité ouverte chargée intervient sur une seule de leurs faces, de sorte que leurs dites faces revêtues de ladite mousse soient orientées dans le même sens, de préférence vers l'extérieur.

13. Combiné de nettoyage, **caractérisé en ce qu'**il comprend un produit essuyant selon l'une quelconque des revendications 1 à 10, solidarisé à un substrat notamment choisi parmi les éponges, les mousses de polyuréthanne et les nontissés récurants.

## Claims

1. Wiping product whose composite structure comprises a hydrophilic substrate chosen from among textiles, hydrophilized polyurethane foams and alveolar cellulose materials, on at least one side of which an open porosity hydrophobic foam is attached, at least on part of the surface of said side, **characterized in that** said foam contains more than 1 % by weight, advantageously more than 5 % by weight, and less than 40% by weight, with respect to its dry weight, of mineral and/or organic fillers in a material or materials not absorbing aqueous liquids.

2. Product as in claim 1, **characterized in that** it consists of a hydrophilic substrate coated on at least part of the surface of only one of its sides with a filler-containing, open porosity hydrophobic foam; advantageously coated on the entirety of the surface of only one of its sides with a filler-containing, open porosity hydrophobic foam.

3. Product as in either of claims 1 or 2, **characterized in that** said foam contains less than 35% by weight, with respect to its dry weight, of said fillers.

4. Product as in any of claims 1 to 3, **characterized in that** said fillers are organic fillers having a shape with revolution symmetry consisting in particular of spheres, or having an asymmetrical shape and consisting in particular of scales or fragments.

5. Product as in any of claims 1 to 4, **characterized in that** said fillers are organic fillers in a material chosen from among polyethylenes, polypropylenes, vinyl polychlorides, polystyrenes, polyacrylates, polymethacrylates, vinyl polyacetates, unsaturated polyesters, polyurethanes, polyamides, the corresponding copolymers, melamine formaldehyde resins and phenol resins.

6. Product as in any of claims 1 to 5, **characterized in that** the largest size of said fillers lies between 5 and 600 µm, advantageously between 10 and 400 µm.

7. Product as in any of claims 1 to 6, **characterized in that** said hydrophilic substrate is a non-woven, a fabric, a knit, a hydrophilized polyurethane foam or an alveolar cellulose material of sponge or sponge-cloth type.

8. Product as in any of claims 1 to 7, **characterized in that** said hydrophobic foam consists of a polyurethane, vinyl polychloride or polyvinylalcohol foam or advantageously a latex foam.

9. Product as in claim 8, **characterized in that** said hydrophobic foam consists of a latex foam obtained from a formulation containing Acrylonitrile-Butadiene-Styrene latex and/or Acrylonitrile-Butadiene latex.

10. Product as in any of claims 1 to 9, **characterized in that**:
- said hydrophilic substrate is a non-woven,
- said foam is a latex foam obtained from a formulation containing Acrylonitrile-Butadiene-Styrene latex and/or Acrylonitrile-Butadiene latex,
- said are vinyl polychloride and/or polyethylene fillers.

11. Method for preparing a product as in any of claims 1 to 10, **characterized in that** it comprises:
- preparing at one open porosity, hydrophobic foam containing said mineral and/or organic fillers in a material or materials not absorbing aqueous liquids;
- attaching said filler-containing foam to the hydrophilic substrate, in particular by bonding or coating followed by heat treatment;
- optionally cutting the wiping product obtained.

12. Mophead comprising a set of flat fringes joined together, **characterized in that** at least part of the flat fringes of said assembly consists at least partly of at least one wiping product as in any of claims 1 to 10; all the flat fringes of said assembly advantageously being in the same wiping product and mounted, when the open porosity filler-containing hydrophobic foam is applied to only one of their sides, so that their said sides coated with said foam are oriented in the same direction, preferably outwardly.

13. Multi-component cleaning object **characterized in that** it comprises a wiping product as in any of claims 1 to 10 attached to a substrate chosen in particular from among sponges, polyurethane foams and scouring non-woven materials.

## Patentansprüche

1. Wischprodukt, dessen Komposit-Struktur ein hydrophiles Substrat, ausgewählt aus Textilien, hydrophilisierten Polyurethanschäumen und zellenförmigen Zellulosematerialien, enthält, wobei bei wenigstens einer der Seiten des Substrats auf wenigstens einem Teil der Seitenoberfläche ein hydrophober Schaum mit offener Porosität aufgebracht ist, **dadurch gekennzeichnet, dass** der Schaum mehr als 1 Gew.-%, bevorzugt mehr als 5 Gew.-%, und weniger als 40 Gew.-%, bezogen auf sein Trockengewicht, mineralische und/oder organische Beladungen aus (einem) wässrige Flüssigkeiten nicht absorbierenden Material(ien) einschließt.

2. Produkt gemäß Anspruch 1, **dadurch gekennzeichnet, dass** es aus einem hydrophilen Substrat besteht, welches auf wenigstens einem Teil der Oberfläche einer seiner Seiten mit einem beladenen hydrophoben Schaum mit offener Porosität überzogen ist, bevorzugt auf der gesamten Oberfläche einer seiner Seiten mit einem beladenen hydrophoben Schaum mit offener Porosität überzogen ist.

3. Produkt gemäß einem der Ansprüche 1 oder 2, **dadurch gekennzeichnet, dass** der Schaum weniger als 35 Gew.-%, bezogen auf sein Trockengewicht, der Beladungen einschließt.

4. Produkt gemäß wenigstens einem der Ansprüche 1 bis 3, **dadurch gekennzeichnet, dass** die Beladungen organische Beladungen sind, welche eine rotationssymmetrische Form aufweisen und insbesondere aus Kugeln bestehen, oder welche eine asymmetrische Form aufweisen und insbesondere aus Splittern oder Fragmenten bestehen.

5. Produkt gemäß wenigstens der Ansprüche bis 4, **dadurch gekennzeichnet**, die Beladungen organische Beladungen aus einem Material, ausgewählt aus Polyethylenen, Polypropylenen, Polyvinylchloriden, Polystyrolen, Polyacrylaten, Polymethacrylaten, Polyvinylacetaten, ungesättigten Polyestern, Polyurethanen, Polyamiden, den entsprechenden Copolymeren, Melamin-Formol-Harzen und Phenolharzen, sind.

6. Produkt gemäß wenigstens einem der Ansprüche 1 bis 5, **dadurch gekennzeichnet, dass** die Beladungen als größtes Maß von 5 bis 600 µm, bevorzugt von 10 bis 400 µm, aufweisen.

7. Produkt gemäß wenigstens einem der Ansprüche 1 bis 6, **dadurch gekennzeichnet, dass** das hydrophile Substrat ein nichtgewobenes Material, Gewebe, Trikot, hydrophilisierter Polyurethanschaum oder zellenförmiges Zellulosematerial vom Schwamm- oder Schwammtuchtyp ist.

8. Produkt gemäß wenigstens einem der Ansprüche 1 bis 7, **dadurch gekennzeichnet, dass** der hydrophobe Schaum aus einem Polyurethanschaum, Polyvinylchloridschaum, Polyvinylalkoholschaum oder, bevorzugt, einem Latexschaum besteht.

9. Produkt gemäß Anspruch 8, **dadurch gekennzeichnet, dass** der hydrophobe Schaum aus einem Latexschaum besteht, der ausgehend von einer Formulierung auf der Basis von Butadien-Styrol-Acrylonitril-Latex und/oder Butadien-Acrylonitril-Latex erhalten wird.

10. Produkt gemäß wenigstens einem der Ansprüche 1 bis 9, **dadurch gekennzeichnet, dass**
- das hydrophile Substrat ein nicht-gewobener Stoff ist,
- der Schaum ein Latexschaum ist, der ausgehend von einer Formulierung auf der Basis von Butadien-Styrol-Acrylonitril-Latex und/oder Butadien-Acrylonitril-Latex erhalten wird,
- die Beladungen Polyvinylchlorid- und/oder Polyethylen-Beladungen sind.

11. Verfahren zur Herstellung eines Produkts gemäß wenigstens einem der Ansprüche 1 bis 10, **dadurch gekennzeichnet, dass** es umfasst:
- Herstellung wenigstens eines hydrophoben Schaums mit offener Porosität, welcher mit den mineralischen und/oder organischen Beladungen aus (einem) wässrige Flüssigkeiten nicht absorbierenden Material(ien) beladen ist,
- Aufbringen des beladenen Schaums auf ein hydrophiles Substrat, insbesondere durch Aufkleben oder Auftragen und anschließende thermische Behandlung,
- gegebenenfalls Zuschneiden des erhaltenen Wischprodukts.

12. Mopkopf, welcher eine Gesamtheit an flachen, miteinander verbundenen Fransen aufweist, **dadurch gekennzeichnet, dass** wenigstens ein Teil der flachen Fransen dieser Gesamtheit zumindest teilweise aus wenigstens einem Wischprodukt gemäß wenigstens einem der Ansprüche 1 bis 10 besteht, wobei bevorzugt alle flachen Fransen dieser Gesamtheit aus dem gleichen Wischprodukt bestehen und, wenn der beladene hydrophobe Schaum mit offener Porosität auf nur einer ihrer Seiten vorliegt, derart angeordnet sind, dass die mit dem Schaum überzogenen Seiten in gleicher Richtung, bevorzugt nach außen, orientiert sind.

13. Reinigungsgegenstand, **dadurch gekennzeichnet, dass** er ein Wischprodukt gemäß wenigstens einem der Ansprüche 1 bis 10 enthält, welches an ein Substrat gebunden ist, insbesondere ausgewählt aus Schwämmen, Polyurethanschäumen und/oder Scheuervliesen.
